# FASCICULE DE BREVET EUROPEEN

(11) **EP 3 212 960 B1**
(45) Date de publication et mention de la délivrance du brevet: **03.10.2018**
(21) Numéro de dépôt: 15801896.0
(22) Date de dépôt: 23.10.2015
(51) Int. Cl.: B29C 70/32, H02K 7/02, F16F 15/30, B29L 31/32

(54) **VOLANT D'INERTIE DEDIE AU STOCKAGE D'ENERGIE**
SCHWUNGRAD FÜR ENERGIESPEICHERUNG
FLYWHEEL INTENDED FOR ENERGY STORAGE

(30) Priorité: 28.10.2014 FR 1402430
(43) Date de publication de la demande: 06.09.2017
(73) Titulaire: Energiestro, 28200 Châteaudun (FR)
(72) Inventeur: GENNESSEAUX, André, F-28200 Conie-Molitard (FR)
(74) Mandataire: Cabinet Plasseraud
(86) Numéro de dépôt international: PCT/FR2015/052850
(87) Numéro de publication internationale: WO 2016/066933

(56) Documents cités:
- FR-A1- 2 939 480
- FR-A1- 2 944 836
- US-A- 4 977 794
- US-A1- 2011 100 156
- US-A1- 2011 100 156
- US-A1- 2012 060 644
- US-A1- 2012 060 644

## Description

L'invention concerne un volant d'inertie dédié au stockage d'énergie et son procédé de fabrication.

L'invention sera plus particulièrement décrite en regard d'un volant fabriqué selon l'invention à base de béton, sans toutefois y être limitée. Le matériau principal constitutif du volant sera choisi pour s'apparenter à un matériau du type béton de sorte à être de faible coût de revient et de résistance à la compression d'au moins 25 MPa.

De manière connue, un volant d'inertie par sa rotation mécanique est utilisé dans un dispositif de stockage d'énergie temporaire qui trouve son application dans de nombreux domaines, tels que dans le stockage et le lissage des énergies renouvelables intermittentes de type éolien, solaire, l'alimentation en électricité de sites isolés, la restitution d'énergie pour le freinage de véhicules, etc.

Au regard d'autres dispositifs de stockage d'énergie électrique tels que les accumulateurs électriques, le volant d'inertie présente l'avantage principal d'une durée de vie quasiment illimitée, impliquant dans la durée un coût de stockage plus bas qu'avec les autres dispositifs.

Un volant d'inertie comporte un corps plein, dénommé usuellement par le terme de « masse », relié à l'arbre rotatif d'un moteur électrique. Le moteur électrique entraîne en rotation le volant d'inertie qui peut atteindre des vitesses de rotation très élevées en quelques minutes, voire même en quelques secondes. Après l'arrêt de l'alimentation du moteur électrique, la masse du volant ayant emmagasiné de l'énergie cinétique continue de tourner et peut alors restituer de l'énergie mécanique qui est à son tour reconvertie en énergie électrique en utilisant le moteur comme génératrice électrique.

La force centrifuge subie par la masse du volant entraîne de très fortes contraintes en traction pour le matériau constitutif de la masse. Aussi est-il nécessaire de choisir un matériau de fabrication qui est hautement résistant à la traction, en particulier résistant à au moins 100 MPa.

Aujourd'hui, la masse d'un volant est fabriquée le plus souvent en acier comme connu des documents US20120060644 ou US20110100156, et depuis quelques années en fibres de carbone. Le document FR2939480 présente une masse d'un volant d'inertie réalisés en béton, avec une coque en fibre de carbone. Or, en raison de son coût de revient élevé, notamment du fait de son matériau constitutif, le volant d'inertie est souvent délaissé pour privilégier d'autres types de dispositifs de stockage d'énergie tels que les accumulateurs électriques.

L'invention a donc pour but de fournir un volant d'inertie de coût de revient inférieur à celui des volants existants, tout en étant aussi résistant et performant.

Selon l'invention, le volant d'inertie destiné au stockage d'énergie, comportant un corps massique cylindrique comprenant un matériau principal qui présente une résistance à la compression d'au moins 25 MPa, tel que du béton, ledit corps étant enveloppé sur au moins une partie de sa surface externe de fibres, le matériau constitutif des fibres présentant une résistance à la traction d'au moins 100 MPa, est caractérisé en ce que la tension d'enroulement des fibres autour du corps engendre la mise en compression dudit matériau principal, et en ce que la tension appliquée aux fibres est telle que la contrainte exercée sur le matériau du corps massique est au moins égale à la moitié de la contrainte maximale admissible, cette contrainte maximale étant inférieure à la limite d'élasticité en compression du matériau constitutif du corps massique, le matériau de ce dernier étant ainsi précontraint.

Ainsi, la masse du volant de l'invention est faite d'un matériau principal, tel que le béton, qui supporte très avantageusement la compression, et est bien moins onéreux que l'acier ou le carbone. En raison de la tension qui a été imposée aux fibres lors de l'enroulement autour du matériau massique, celles-ci en traction engendrent une mise en compression très forte du matériau massique. Le matériau massique est précontraint.

Le béton est pourtant un matériau qui n'a nullement vocation à être utilisé pour un volant d'inertie à stockage d'énergie, car il présente une résistance à la traction pratiquement nulle. En associant au béton des fibres enroulées sous tension, malgré le défaut inhérent du béton relatif à sa relativement faible résistance à la traction, le volant de l'invention présente de manière inattendue une propriété élevée de résistance à la traction, même pour des vitesses très importantes.

De manière surprenante, les fibres associées à la surface extérieure de la masse en béton, conduisent à pré-contraindre de manière suffisante le béton, de sorte à générer une compression appropriée qui s'opposera aux forces de traction que subira le volant lors de sa rotation. L'ensemble, béton et recouvrement extérieur du béton par des fibres sous tension, conduit avantageusement à une structure apte à résister aux forces de traction que subira un volant à stockage d'énergie.

Une telle structure de volant permet d'atteindre des vitesses de rotation élevées bien avant le risque de rupture du matériau constitutif principal, permettant un stockage en grande quantité d'énergie.

La tension appliquée aux fibres lors de l'enroulement est telle que la contrainte exercée sur le matériau de la masse est au moins égale à la moitié de la contrainte maximale admissible, cette contrainte maximale étant inférieure à la limite d'élasticité en compression du matériau constitutif de la masse.

Cette limite d'élasticité dépend bien entendu du matériau.

Le béton présente une limite d'élasticité en compression de 25 à 100 MPa, voire plus pour les bétons fibrés.

La limite d'élasticité en compression correspond à la valeur pour laquelle le matériau constituant le volant atteint la rupture.

La contrainte maximale admissible s'entend comme étant la contrainte maximale à ne pas dépasser pour atteindre la durée de vie prévue, correspondant à un nombre de cycles minimal en fonctionnement. La contrainte maximale admissible dépend de nombreux facteurs, comme la fatigue du matériau, la période des cycles, leur durée, leur nombre etc.

La contrainte maximale admissible est toujours inférieure à la limite d'élasticité en compression.

Par exemple, pour un béton qui a une limite d'élasticité en compression de 200 MPa, la contrainte maximale admissible pour atteindre 10.000 cycles est de l'ordre de 120 MPa, et la contrainte de compression due à la tension d'enroulement des fibres sera d'au moins 60 MPa.

On veillera de préférence à utiliser un béton ayant une limite d'élasticité en compression élevée, et par conséquent à utiliser un béton suffisamment chargé en ciment.

L'épaisseur du matériau principal sera bien plus importante que l'épaisseur de l'enveloppe en fibres, cette dernière étant néanmoins adaptée pour assurer la contrainte idoine.

En particulier, le rapport e/D entre l'épaisseur e de l'enveloppe, et D, le diamètre du corps cylindrique incluant les épaisseurs du matériau principal et de ladite enveloppe, est supérieur à 1/100.

La partie principale du corps (la masse du volant) faite par exemple en béton, peut être constituée uniquement de béton en tant que tel, ou comprendre des fibres, telles qu'en verre ou même en métal.

Le béton en tant que matériau constitutif principal formant la masse du volant est avantageusement peu onéreux et supporte la compression. Néanmoins, l'invention s'applique à tout matériau autre que de l'acier et des fibres de carbone, et qui présente une bonne résistance à la compression d'au moins 25 MPa, de préférence d'au moins 40 MPa, voire même supérieure à 80 MPa, tout en présentant un faible coût de revient, en particulier un coût inférieur à 1 €/kg. A ce jour, seul le béton présente ces caractéristiques.

Avantageusement, les fibres forment une enveloppe sous tension couvrant au moins la surface cylindrique extérieure du corps, éventuellement également les deux bases d'extrémité du corps cylindrique.

Les fibres sont de préférence des fibres de verre, combinées éventuellement avec de la matière polymérique, par exemple en polyester ou en époxy, formant un enrobage pour les fibres. La matière polymérique est de préférence déposée après l'enroulement filamentaire sur et entre les fibres.

Les fibres en verre présentent l'avantage d'être légères et permettront d'optimiser la vitesse de rotation du volant.

En variante, les fibres pourraient être en carbone ou en acier.

Le matériau constitutif des fibres présente une résistance à la traction élevée, d'au moins 100 MPa.

Le matériau constitutif des fibres présente avantageusement un module d'Young proche de celui du matériau constitutif principal du corps (le béton), ou en particulier inférieur à 100 GPa afin que les fibres se déforment concomitamment au béton lors de la rotation du volant.

Le matériau constitutif des fibres présente une faible densité, notamment moins de 4, afin d'assurer, jusqu'à des vitesses élevées de rotation, sa fonction de comprimer le corps du volant.

Dans une variante de réalisation, le corps du volant comporte entre le béton et les fibres à l'extérieur du corps, une couche d'interface.

Les fibres lorsqu'elles sont en verre sont par exemple en verre E, verre qui présente l'avantage d'être économique en terme de coûts. En cas d'utilisation de verre E, il est préféré d'agencer une couche d'interface entre le béton et les fibres de verre E, cette couche d'interface étant par exemple en fibres, en particulier en verre distinct du verre E. En variante, la couche d'interface pourrait être faite d'un autre matériau tel qu'une couche de peinture.

De préférence, pour des raisons de coût, les fibres de carbone en tant que fibres ne sont pas utilisées.

Les fibres sont des fibres longues et issues d'un ou plusieurs fils enroulés sous tension autour du corps en matériau principal.

Dans un mode de réalisation, le corps est cylindrique et creux et comporte un matériau supplémentaire recouvrant la paroi intérieure du corps cylindrique, en particulier ce matériau est fait d'acier. Ce matériau supplémentaire est par exemple issu d'un conduit ou cylindre en acier autour duquel a été moulé le matériau principal.

Le corps du volant est cylindrique et les fibres recouvrent toute la surface cylindrique extérieure et éventuellement les deux bases d'extrémité du corps cylindrique.

Avantageusement, les fibres sont enroulées sur la surface cylindrique selon une direction tangentielle au corps, en faisant un angle par rapport à l'axe longitudinal du corps (de manière hélicoïdale), notamment un angle compris entre 10 et 90°, de préférence selon un angle de ou proche de 90° par rapport à l'axe longitudinal du corps.

L'enroulement comporte plusieurs couches de manière à fournir une certaine épaisseur à l'enveloppe. Les couches peuvent comprendre des enroulements avec un angle de l'ordre de 90° puis des enroulements avec un angle distinct, par exemple de 45°. En particulier, lorsque les deux bases d'extrémité sont recouvertes, l'enveloppe filamentaire comporte une épaisseur de fibres selon un enroulement de l'ordre de 90° sur la surface cylindrique, et une épaisseur supplémentaire selon un enroulement de 45° recouvrant la surface cylindrique et les bases d'extrémité.

Selon une autre caractéristique, le corps du volant est cylindrique et comporte un alésage central s'étendant selon l'axe longitudinal du corps cylindrique. Pour la fixation du volant en vue de sa rotation en position d'utilisation, le volant comporte deux moyens adaptés à la fixation et au centrage, telles que des moyeux, qui sont rendus solidaires de l'alésage central aux deux bases respectives d'extrémité du corps cylindrique.

Dans une variante de réalisation, le corps du volant est cylindrique et plein et comporte un arbre central intégré audit corps, l'arbre étant dédié à la fixation du volant pour son utilisation.

Dans une autre variante encore, le corps du volant est cylindrique et plein et homogène, et comporte au niveau de chaque base d'extrémité distale un moyen de fixation destiné au montage du volant et à son centrage en vue de son utilisation. Le moyen est agencé au centre de la base d'extrémité du corps cylindrique. L'ensemble du corps est plein sans cavité interne. Chacune des bases d'extrémité comprend par exemple un bossage central destiné à accueillir le moyen de fixation du volant pour son utilisation. Chaque moyen de fixation est par exemple constitué d'un moyeu ou d'un arbre.

Le moyen de fixation présente une embase qui coopère avec le corps du volant, les fibres étant déposées sur les bases distales du corps cylindrique pour recouvrir le matériau principal et envelopper l'embase du moyen de fixation, les rendant solidaires du corps du volant. L'association dudit moyen peut en outre être obtenue par collage ou par engagement étroit et ajusté dans le corps du volant lorsqu'il est creux ou sur une partie en saille du corps du volant (bossage central) lorsque le volant est plein.

L'invention est également relative à un procédé de fabrication du volant de l'invention.

Le procédé comporte une étape de fabrication du corps du volant par moulage du matériau principal, puis, après durcissement dudit matériau, une étape d'enroulement filamentaire sous tension des fibres, éventuellement suivie d'une étape d'imprégnation des fibres par une résine polymérique.

Lorsqu'un moyen destiné à la fixation et la rotation est intégré au corps du volant, le moyen comporte une embase destinée à être rendue solidaire dudit corps, le procédé comporte une étape préalable à l'enroulement, de positionnement aux bases d'extrémité du corps du volant des embases des pièces, l'enroulement qui suit cette étape étant réalisé sur l'ensemble du corps cylindrique en matériau principal, y compris sur les bases d'extrémité dudit corps, et enveloppe l'embase de chaque pièce.

Ainsi, le volant d'inertie peut être utilisé dans un dispositif de stockage d'énergie. Le dispositif de stockage d'énergie comporte un moteur réversible en générateur et logé dans l'enceinte, caractérisé en ce qu'il comporte le volant d'inertie de l'invention, le volant étant associé au moteur, entraîné par le moteur et guidé en rotation par des paliers.

Dans la suite de la description, le terme « extérieur » relatif au corps du volant, s'entend en qualifiant les parties en regard de l'environnement extérieur du volant, c'est-à-dire les parties qui seront disposées à l'opposé de l'arbre du moteur et en vis-à-vis de l'enceinte de protection dans le cadre d'une installation normale du volant.

La présente invention est maintenant décrite à l'aide d'exemples uniquement illustratifs et nullement limitatifs de la portée de l'invention, et à partir des illustrations ci-jointes, dans lesquelles :
- La figure 1 illustre une vue en perspective d'un exemple de réalisation du volant selon l'invention, le volant étant creux ;
- La figure 2 représente une vue en coupe longitudinale d'un dispositif de stockage d'énergie comprenant le volant de la figure 1 ;
- La figure 3 est une vue en coupe partielle d'une variante de réalisation du volant de la figure 1 ;
- La figure 4 est une vue en coupe longitudinale partielle d'une autre variante de réalisation du volant de la figure 1 ;
- La figure 5 est une vue en perspective du volant de la figure 4 ;
- La figure 6 est une vue en coupe longitudinale d'un autre exemple de réalisation du volant, le volant étant plein ;
- La figure 7 une vue en coupe longitudinale partielle d'une variante de réalisation du volant pour laquelle le volant est également plein ;
- La figure 8 est une vue en perspective du volant de la figure 7 ;
- La figure 9 est une courbe de variation de la contrainte dans le corps en fonction de la vitesse périphérique du volant ;
- La figure 10 est une vue en coupe schématique partielle du volant et d'un moyen de fixation de l'axe central de ce dernier.

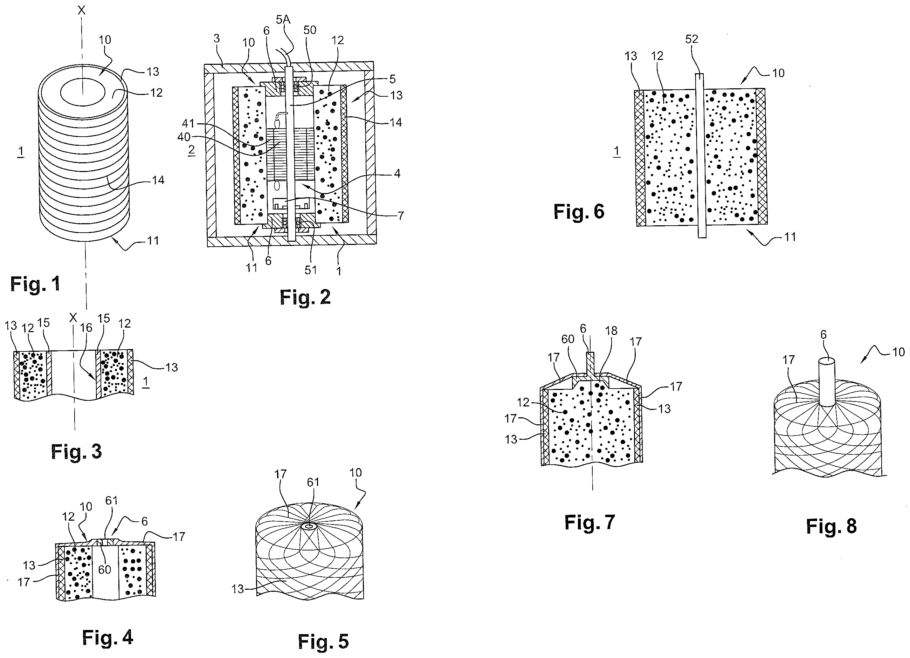

Le volant d'inertie 1 de l'invention illustré sur la figure 1 présente un corps de forme cylindrique d'axe longitudinal X.

En regard de la figure 2, le volant 1 est destiné à être utilisé dans un dispositif de stockage d'énergie 2.

Le dispositif de stockage d'énergie 2 comporte dans une enceinte fermée 3, le volant 1, un moteur électrique/générateur 4 qui est formé d'un stator 40 et d'un rotor 41, le rotor 41 étant monté sur le volant 1 et le stator 40 sur un arbre fixe 5.

L'arbre 52 est creux pour permettre le passage des câbles d'alimentation 5A du moteur.

L'arbre 52 porte à chacune de ses extrémités un roulement à billes respectivement 50 et 51.

Dans l'exemple de réalisation montré sur les figures 1 et 2, tout comme dans les variantes des figures 3 et 4, le volant 1 est creux. L'arbre 5 traverse de manière centrale et selon sa longueur, le corps longitudinal du volant.

Le volant 1 est associé par ses deux extrémités distales opposées 10 et 11 à l'arbre 5, et plus exactement aux roulements à billes 50 et 51, via des organes de liaison et de fixation 6. Ces organes de liaison 6 sont par exemple deux moyeux associés respectivement aux extrémités 10 et 11 du volant, et coopérant avec les deux roulements respectifs 50 et 51.

Comme il sera vu plus loin, les deux moyeux 6 sont intégrés au corps du volant 1, plus particulièrement aux deux bases d'extrémité 10 et 11 du corps cylindrique du volant.

Enfin, un aimant 7 peut être monté sur l'arbre 5 créant sur le moyeu 6 inférieur (en position montée verticale du volant), une force d'attraction égale au poids du volant, de façon à annuler l'effort axial exercé sur chaque roulement. Cet agencement permet d'utiliser des roulements de petite dimension qui résistent à de grandes vitesses de rotation.

Selon l'invention, en regard des figures 1 et 2, le corps du volant d'inertie 1 comprend une masse 12 faite d'un matériau constitutif, dit matériau principal pour le volant, par exemple en béton, et une enveloppe 13 faite de fibres 14 enroulées sous tension et induisant des forces de compression sur la masse 12.

La masse 12 en béton est fabriquée par moulage. L'enveloppe 13 est obtenue en enroulant sous tension les fibres autour de la masse 12 afin d'engendrer une contrainte en compression sur ladite masse 12 lorsque celle-ci est au repos, c'est-à-dire en l'absence de rotation du volant.

Le matériau de la masse 12 est ainsi précontraint.

La tension appliquée aux fibres 14 lors de l'enroulement est telle que la contrainte exercée sur le matériau de la masse 12 est au moins égale à la moitié de la contrainte maximale admissible, cette contrainte maximale étant inférieure à la limite d'élasticité en compression du matériau constitutif de la masse 12.

Cette limite d'élasticité dépend bien entendu du matériau. Pour le béton, on veillera à utiliser un béton ayant une limite d'élasticité en compression élevée, et par conséquent à utiliser un béton suffisamment chargé en ciment.

L'épaisseur (dans la direction radiale) du béton 12 sera bien plus importante que l'épaisseur de l'enveloppe 13 en fibres, cette dernière épaisseur étant suffisante pour assurer la contrainte idoine.

En particulier, le rapport e/D entre l'épaisseur « e » de l'enveloppe 13, et « D », le diamètre du corps cylindrique incluant les épaisseurs du matériau de la masse 12 et de ladite enveloppe 13, est supérieur à 1/100.

De préférence, le rapport e/D est inférieur à 1/10.

Lorsque le volant est creux, la masse 12 est annulaire. Avantageusement, lorsque la masse est en béton, il convient que l'épaisseur annulaire de béton soit au moins la moitié du rayon du corps cylindrique du volant, pour fournir avec ce matériau peu onéreux un maximum de masse en vue d'un stockage d'énergie maximisé.

Selon l'invention, les fibres 14 sont par exemple en verre.

L'enroulement est réalisé au moins sur la surface cylindrique du corps du volant.

L'exemple de réalisation de la figure 1 est un volant au corps creux. Les fibres sont agencées sur toute la surface cylindrique, hormis sur les bases d'extrémité 10 et 11.

La masse 12 est faite d'un unique matériau, tel qu'en béton. Néanmoins, ce matériau pourrait être chargé en fibres.

Dans la variante de réalisation de la figure 3, le volant creux 1 similaire à celui de la figure 1 comporte en outre, un matériau supplémentaire 15 formant la paroi intérieure du corps cylindrique. Avantageusement, ce matériau offre une résistance à l'enroulement de la masse 12 par les fibres 14, ce qui a pour effet d'augmenter encore la contrainte en compression au regard du matériau 12 (le béton) constitutif principal du volant.

Le matériau 15 est par exemple de l'acier. En particulier, la paroi intérieure en acier est formée par un conduit 16 qui a été rendu solidaire du béton lors du moulage du béton.

La variante de réalisation illustrée sur les figures 4 et 5 correspond à un volant creux pour lequel les bases d'extrémités 10 et 11 (seule étant visible la base 10) sont recouvertes par un enroulement filamentaire 17 de fibres 14. L'enroulement filamentaire 17 forme sur la surface cylindrique du corps une seconde enveloppe recouvrant la première enveloppe 13.

Les bases 10 et 11 sont également enveloppées pour rendre solidaires du volant les organes de liaison et de fixation 6. Sur les figures 4 et 5 est illustrée l'une des bases 10 seulement, l'autre base étant identique. Une pièce 6, formant ici un moyeu, est maintenue au niveau de la partie centrale creuse de la base d'extrémité 10 du corps cylindrique grâce à l'enroulement filamentaire 17.

La pièce 6 présente une embase 60 qui est intégrée à l'enroulement filamentaire 17. Seul l'orifice 61 du moyeu n'est pas recouvert de fibres (figure 5) pour le rendre visible et accessible en vue du montage ultérieur du volant sur l'arbre 5 et/ou sur le roulement à bille 50 ou 51.

Dans un autre exemple de réalisation pour la masse 12 du volant, celle-ci n'est pas creuse mais pleine.

Ainsi, la figure 6 illustre un volant plein comprenant le béton 12 et l'enveloppe 13 de fibres. Pour monter le volant dans le dispositif de stockage 1A, le volant 1 intègre un arbre 52 qui dépasse des bases d'extrémités 10 et 11. L'arbre 52 a la même fonction que l'arbre 5 de la figure 2. L'arbre 52 est rendu solidaire du corps du volant lors de la fabrication par moulage de la masse 12, l'arbre 52 ayant été placé dans le moule dans lequel a été coulé le béton.

La variante des figures 7 et 8 montre également un corps plein. Cette variante sera préférée à celle de la figure 6 pour laquelle le risque existe au cours du temps, de désolidarisation de l'arbre 5 du béton.

Dans cette variante, le corps 12 du volant est homogène, c'est-à-dire qu'il ne comporte pas d'autre matériau que le matériau principal constitutif. De la sorte, la contrainte dans le corps reste sensiblement constante, alors qu'elle augmente près d'une hétérogénéité telle qu'un vide ou un matériau rigide. On peut donc faire tourner un volant plein et homogène plus vite qu'un volant creux, ou qu'un volant plein et hétérogène, et donc finalement y stocker plus d'énergie.

Dans l'exemple des figures 7 et 8, le corps massique 12 au niveau des bases d'extrémité 10 et 11 (seule étant visible la base 10) comporte un bossage central 18 issu du moulage. Ce bossage 18 accueille par coopération mutuelle un moyen de fixation 6 tel qu'un arbre, l'embase 60 dudit moyen étant rapportée par engagement mutuel autour du bossage. Le moyen de fixation 6 peut éventuellement être assemblé par collage. Ledit moyen 6 est rendu solidaire du corps du volant grâce à l'enroulement filamentaire 17 recouvrant la base d'extrémité 10.

A la place du bossage 18, on peut ménager (lors du moulage) un orifice borgne central dans la base du cylindre pour agencer le moyen de fixation. Toutefois, il est préférable d'éviter toute cavité dans le béton afin de ne pas occasionner de contrainte supplémentaire.

A titre d'exemple, un volant d'inertie de l'invention présente les caractéristiques suivantes :
Le volant 1 est cylindrique plein selon la configuration des figures 7 et 8.
- Le matériau principal est en béton, le béton ayant une limite élastique à la compression de 100 MPa.
- Le diamètre du cylindre est de 0,6 m.
- Il présente une longueur (hauteur) de 2 m.
- Sa masse est de 1,4 t.
- L'épaisseur de l'enveloppe 13 en fibres de verre est de 12 mm.
- La masse de fibres de verre est de 0,11 t, soit très inférieure à la masse de béton.
- Les fibres de verre ont été enroulées selon un angle de 90° par rapport à l'axe longitudinal du cylindre, et sous une tension qui engendre une contrainte de 1500 MPa.
- La précontrainte dans le béton (compression) est de -50 MPa.
- Le volant peut tourner jusqu'à 7 700 tours/min, vitesse à laquelle la précontrainte dans le béton devient nulle. L'énergie stockée est alors de 23 MJ ou 6,4 kWh.

Selon une variante de mise en oeuvre de l'invention, on réalise l'enveloppe en fibres avant le moulage du béton (appelé à constituer le corps du volant). La précontrainte du béton est obtenue lors du moulage du béton à l'intérieur de l'enveloppe formée de fibres. Par exemple, le béton à l'état liquide est soumis à une très forte pression (de l'ordre de sa limite d'élasticité en compression), pendant toute la durée de prise du béton.

Selon cette variante de procédé :
- on enroule les fibres sur un mandrin avec une tension d'enroulement minimale, correspondant à une contrainte de l'ordre de quelques MPa, pour éviter qu'elles ne glissent ou assurer leur maintien sur la surface extérieure du mandrin ;
- on assemble les fibres avec une résine (polymérisable ou thermodurcissable ou thermoplastique) pour former une enveloppe cylindrique ;
- après durcissement ou polymérisation de la résine, on retire le mandrin ;
- on place dans un moule le tube délimité par les fibres assemblées par la résine ;
- on injecte du béton dans l'espace intérieur du tube à une pression élevée, à une valeur de pression apte à créer une tension dans les fibres ; la pression est suffisamment élevée pour tenir compte du phénomène naturel de retrait du béton ; cette pression du béton conduit à une tension dans les fibres, pendant le moulage, qui est supérieure à celle nécessaire en service ; la pression est maintenue le temps nécessaire à la prise du béton.

On peut également utiliser un béton dit « expansif » qui a la propriété d'augmenter de volume lorsqu'il prend.

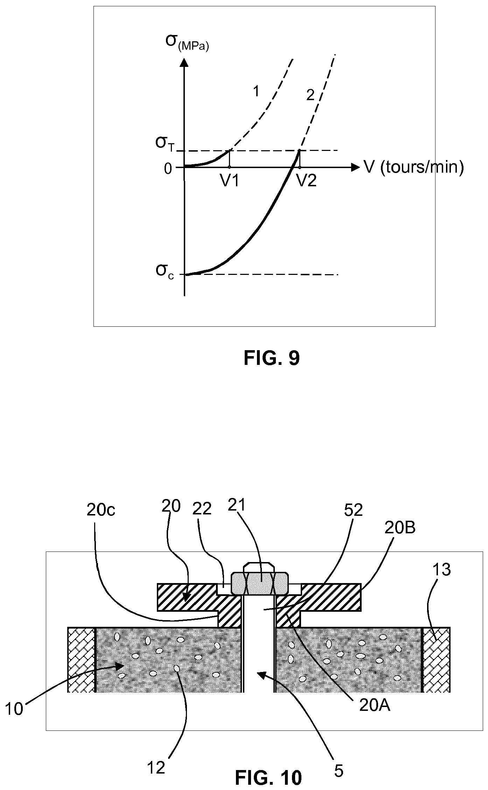

On décrit en référence à la figure 9 une courbe de variation de la contrainte dans le corps en fonction de la vitesse de rotation périphérique du volant.

La courbe 1 se réfère à un volant en béton armé classique, tandis que la courbe 2 se réfère à un volant en béton fretté selon l'invention.

Les lignes horizontales en pointillé délimitent le domaine d'utilisation du béton et correspondent respectivement à :
- une valeur de contrainte σ_{τ} qui est la contrainte limite en traction, et de l'ordre de quelques MPa ;
- une valeur de contrainte σ_{C} qui est la contrainte limite en compression, appelée « contrainte maximale admissible », et de l'ordre de plusieurs dizaines de MPa.

A cause de la force centrifuge, La contrainte « σ » augmente comme le carré de la vitesse « V » périphérique du volant : les courbes σ=f(V) sont donc des paraboles.

Pour un corps de volant en béton classique (courbe 1), la contrainte initiale (donc lorsque la vitesse périphérique est nulle, soit V=0) est nulle. La limite σ_{τ} est atteinte pour une faible vitesse de rotation (référencée V1, de l'ordre de quelques dizaines de kilomètres par heure). La quantité d'énergie stockée dans le béton est donc très faible.

Pour un corps de volant en béton de l'invention, associé aux fibres de précontrainte (courbe 2), la compression appliquée par l'enroulement de fibres fait que la contrainte initiale est proche de la « contrainte maximale admissible ». Ceci a pour conséquence qu'on atteint la limite σ_{τ} pour une vitesse de rotation élevée (référencée V2, de l'ordre de plusieurs centaines de kilomètres par heure). La quantité d'énergie stockée dans le béton est ainsi importante.

La figure 10 montre une vue de détail d'un mode de fixation du volant 10 de la figure 6 pourvu d'un axe central 5, sur une structure. Seule la partie terminale supérieure du volant est montrée, étant entendu que la partie inférieure est identique.

L'extrémité supérieure 52 de l'axe 5 dépasse de la surface supérieure du volant. Un flasque annulaire 20 est centré sur la partie d'extrémité 52, et posé contre la face supérieure du corps 12 du volant.

La partie inférieure du flasque, tournée vers le volant, comporte une partie annulaire centrale 20A portant contre le corps 12 et une partie annulaire extérieure 20B décalée vers le haut (en s'éloignant du volant) par un épaulement 20C.

Un écrou 21 coopère avec l'extrémité filetée de la partie terminale 52 de l'axe, et prend appui sur un évidement annulaire central 22, prévu sur la face supérieure du flasque 20.

Cette variante de fixation présente plusieurs avantages. Le serrage des écrous 21 place l'axe 52, qui est en acier, en traction, et le corps 12, qui est en béton, en compression, ce qui est le mode de travail préféré de chaque matériau. Il s'ensuit une précontrainte du volant dans la direction axiale, qui le rend très robuste. De plus, le flasque 20 facilite les opérations nécessaires au fonctionnement du volant : manutention, équilibrage, suspension magnétique, fixation des roulements, fixation axiale, etc.

Par conséquent, l'invention, grâce au matériau principal de la masse du volant, qui est précontraint via l'enroulement de fibres sous tension, permet de fournir une compression telle dudit matériau qu'il est possible d'atteindre des vitesses de rotation élevées avant d'atteindre la rupture du matériau, ce qui permet très avantageusement de stocker une grande quantité d'énergie. Le matériau principal est en particulier du béton, de faible prix de revient et résistant à la compression.

## Revendications

1. **Volant d'inertie** (1) destiné au stockage d'énergie, comportant un **corps massique** (12) cylindrique comprenant un **matériau** principalement constitué de béton qui présente une résistance à la compression d'au moins 25 MPa, ledit corps massique (12) étant enveloppé sur au moins une partie de sa surface externe de **fibres** (14) le matériau constitutif des fibres présentant une résistance à la traction d'au moins 100 MPa,
**caractérisé en ce que** la **tension d'enroulement des fibres** autour du corps (12) engendre la mise en compression du corps massique, et **en ce que** la tension appliquée aux fibres est telle que la contrainte exercée sur le matériau constitutif du corps massique (12) est au moins égale à la moitié de la contrainte maximale admissible, cette contrainte maximale étant inférieure à la limite d'élasticité en compression du matériau constitutif du corps massique, le matériau de ce dernier étant ainsi précontraint.

2. Volant d'inertie selon la revendication 1, **caractérisé en ce que** les fibres (14) sont faites d'un matériau qui présente un module d'Young inférieur à 100 GPa, et de préférence une densité inférieure à 4, tel que du verre.

3. Volant d'inertie selon l'une des revendications 1 ou 2, **caractérisé en ce que** les fibres sont des fibres de verre.

4. Volant d'inertie selon l'une quelconque des revendications précédentes, **caractérisé en ce que** les fibres sont enroulées sur la surface cylindrique du corps selon une direction tangentielle au corps, en faisant un angle par rapport à l'axe longitudinal du corps, notamment un angle compris entre 10 et 90°, de préférence selon un angle de ou proche de 90° par rapport à l'axe longitudinal du corps.

5. Volant selon l'une des revendications 1 à 4, **caractérisé en ce que** les fibres sont combinées avec de la matière polymérique, telle qu'en polyester ou en époxy, la matière polymérique se présentant sous forme d'enrobage pour les fibres et imprégnant ces dernières, les fibres et la matière polymérique formant une enveloppe (13) sous tension couvrant au moins une partie de la surface cylindrique extérieure du corps.

6. Volant d'inertie selon l'une quelconque des revendications précédentes, **caractérisé en ce que** le corps (12) est creux et comporte un matériau supplémentaire (15) recouvrant la paroi intérieure du corps cylindrique, en particulier ce matériau est fait d'acier.

7. Volant d'inertie selon l'une quelconque des revendications 1 à 5, **caractérisé en ce que** le corps du volant est plein, et comporte un arbre central (52) intégré audit corps.

8. Volant d'inertie selon l'une quelconque des revendications 1 à 7, **caractérisé en ce que** le corps (12) du volant est plein et homogène, et comporte au niveau de chaque base d'extrémité distale un moyen de fixation (6).

9. Dispositif de stockage d'énergie (2) comportant une enceinte de protection (3), un moteur (4) qui est réversible en générateur et est logé dans l'enceinte, **caractérisé en ce qu'**il comporte un volant d'inertie (1) selon l'une quelconque des revendications précédentes, le volant étant associé au moteur, entraîné par le moteur et guidé en rotation par des paliers.

10. **Procédé de fabrication** d'un volant d'inertie selon l'une quelconque des revendications 1 à 8,
**caractérisé en ce qu'**il comporte une étape de fabrication par moulage, du corps (12) fait principalement en béton qui présente une résistance à la compression d'au moins 25 MPa, puis, après durcissement dudit béton, une étape d'enroulement filamentaire sous tension des fibres de précontrainte qui sont éventuellement imprégnées d'une résine polymérique.

11. **Procédé de fabrication** d'un volant d'inertie selon l'une quelconque des revendications 1 à 8, **caractérisé en ce qu'**il comporte les étapes suivantes :
- on enroule les fibres sur un mandrin avec une tension d'enroulement minimale, pour éviter qu'elles ne glissent et/ou assurer leur maintien sur la surface extérieure du mandrin ;
- on assemble les fibres par une résine pour former une enveloppe cylindrique ;
- on retire le mandrin ;
- on place dans un moule le tube délimité par les fibres assemblées par la résine ;
- on injecte du béton dans l'espace intérieur du tube à une pression élevée, à une valeur de pression apte à créer une tension dans les fibres, la pression étant maintenue le temps nécessaire à la prise du béton.

12. **Dispositif de fixation** d'un volant selon l'une des revendications 1 à 7, ledit volant comprenant un axe central (5) dont au moins une extrémité dépasse de la surface du volant, **caractérisé en ce qu'**il comporte au moins un flasque (20) annulaire, centré sur la partie d'extrémité de l'axe et appuyé contre la face du corps du volant, et **en ce qu'**il comprend en outre au moins un moyen de serrage (21) du flasque sur le volant apte à coopérer avec l'extrémité de l'axe.

## Patentansprüche

1. Schwungrad (1), das zur Energiespeicherung bestimmt ist, umfassend einen zylindrischen Massenkörper (12), umfassend ein hauptsächlich aus Beton bestehendes Material, das eine Kompressionsbeständigkeit von mindestens 25 MPa aufweist, wobei der Massenkörper (12) auf mindestens einem Teil seiner Außenfläche von Fasern (14) umhüllt ist, wobei das Material, aus dem die Fasern bestehen, eine Zugfestigkeit von mindestens 100 MPa aufweist,
**dadurch gekennzeichnet, dass** die Wickelspannung der Fasern um den Körper (12) die Kompression des Massenkörpers erzeugt, und dass die an die Fasern angelegte Spannung derart ist, dass die Spannung, die auf das Material, aus dem der Massenkörper (12) besteht, ausgeübt wird, mindestens gleich der Hälfte der maximal zulässigen Spannung ist, wobei diese maximale Spannung geringer als die Elastizitätsgrenze des Materials, aus dem der Massenkörper besteht, bei Kompression ist, wobei das Material dieses letztgenannten somit vorgespannt wird.

2. Schwungrad nach Anspruch 1, **dadurch gekennzeichnet, dass** die Fasern (14) aus einem Material sind, das ein Young-Modul unter 100 GPa und vorzugsweise eine Dichte unter 4 aufweist, wie beispielsweise Glas.

3. Schwungrad nach einem der Ansprüche 1 oder 2, **dadurch gekennzeichnet, dass** die Fasern Glasfasern sind.

4. Schwungrad nach einem der vorhergehenden Ansprüche, **dadurch gekennzeichnet, dass** die Fasern auf die zylindrische Fläche des Körpers in einer Tangentialrichtung zum Körper gewickelt sind, wobei ein Winkel zur Längsachse des Körpers gebildet wird, insbesondere ein Winkel zwischen 10 und 90°, vorzugsweise in einem Winkel von oder nahe zu 90° zur Längsachse des Körpers.

5. Schwungrad nach einem der Ansprüche 1 bis 4, **dadurch gekennzeichnet, dass** die Fasern mit Polymermaterial, wie einem Polyester oder Epoxy, kombiniert sind, wobei das Polymermaterial in Form einer Umhüllung für die Fasern, die diese letztgenannten imprägniert, vorhanden ist, wobei die Fasern und das Polymermaterial eine Hülle (13) unter Spannung bilden, die zumindest einen Teil der zylindrischen Außenfläche des Körpers bedeckt.

6. Schwungrad nach einem der vorhergehenden Ansprüche, **dadurch gekennzeichnet, dass** der Körper (12) hohl ist und ein zusätzliches Material (15) umfasst, das die Innenwand des zylindrischen Körpers bedeckt, wobei dieses Material insbesondere aus Stahl ist.

7. Schwungrad nach einem der Ansprüche 1 bis 5, **dadurch gekennzeichnet, dass** der Körper des Schwungrads voll ist und eine zentrale Welle (52) umfasst, die in den Körper integriert ist.

8. Schwungrad nach einem der Ansprüche 1 bis 7, **dadurch gekennzeichnet, dass** der Körper (12) des Schwungrads voll und homogen ist und im Bereich jeder distalen Endbasis ein Befestigungsmittel (6) umfasst.

9. Vorrichtung zur Energiespeicherung (2), umfassend einen Schutzraum (3), einen Motor (4), der zu einem Generator umkehrbar und in dem Raum angeordnet ist, **dadurch gekennzeichnet, dass** sie ein Schwungrad (1) nach einem der vorhergehenden Ansprüche umfasst, wobei das Schwungrad dem Motor zugeordnet ist, vom Motor angetrieben wird und in Drehung durch Lager geführt wird.

10. Verfahren zur Herstellung eines Schwungrads nach einem der Ansprüche 1 bis 8, **dadurch gekennzeichnet, dass** es einen Schritt der Herstellung durch Formguss des Körpers (12) umfasst, der hauptsächlich aus Beton besteht, der eine Kompressionsbeständigkeit von mindestens 25 MPa aufweist, dann, nach Aushärtung des Betons, einen Schritt des fadenförmigen Umwickelns unter Spannung von Vorspannfasern, die eventuell mit einem Polymerharz imprägniert sind.

11. Verfahren zur Herstellung eines Schwungrads nach einem der Ansprüche 1 bis 8, **dadurch gekennzeichnet, dass** es die folgenden Schritte umfasst:
- Wickeln der Fasern um einen Dorn mit einer minimalen Wickelspannung, um zu vermeiden, dass sie gleiten, und/oder um ihren Halt auf der Außenfläche des Dorns zu gewährleisten;
- Zusammenfügen der Fasern durch ein Harz, um eine zylindrische Hülle zu bilden;
- Herausziehen des Dorns;
- Anordnen des von den durch das Harz zusammengefügten Fasern gebildeten Rohrs in einer Form;
- Einspritzen des Betons in den Innenraum des Rohrs mit hohem Druck, mit einem Druckwert, der geeignet ist, eine Spannung in den Fasern zu erzeugen, wobei der Druck die für das Abbinden des Betons notwendige Zeit lang aufrechterhalten wird.

12. Vorrichtung zur Befestigung eines Schwungrads nach einem der Ansprüche 1 bis 7, wobei das Schwungrad eine zentrale Achse (5) umfasst, von der mindestens ein Ende über die Fläche des Schwungrads hinausragt, **dadurch gekennzeichnet, dass** sie mindestens einen ringförmigen Flansch (20) umfasst, der auf dem Endteil der Achse zentriert ist und an der Fläche des Körpers des Schwungrads anliegt, und dass sie ferner mindestens ein Mittel (21) zum Festklemmen des Flansches auf dem Schwungrad umfasst, das geeignet ist, mit dem Ende der Achse zusammenzuwirken.

## Claims

1. Flywheel (1) intended for energy storage, comprising a cylindrical mass body (12) comprising a material mainly constituted of concrete that has a compression resistance of at least 25 MPa, said mass body (12) being surrounded on at least one portion of the outer surface thereof with fibres (14) the material that makes up the fibres having a tensile strength of at least 100 MPa,
**characterised in that** the tension of winding the fibres around the body (12) leads to the compression of said mass body, and **in that** the tension applied to the fibres is such that the stress exerted on the material constituting the mass body (12) is at least equal to half of the maximum acceptable stress, said maximum stress being lower than the compression yield strength of the material that makes up the mass body, the material of the latter thus being pre-stressed.

2. Flywheel according to claim 1, **characterised in that** the fibres (14) are made from a material that has a Young's modulus less than 100 GPa, and preferably a density less than 4, such as glass.

3. Flywheel according to one of claims 1 or 2, **characterised in that** the fibres are glass fibres.

4. Flywheel as claimed in any preceding claim, **characterised in that** the fibres are wound on the cylindrical surface of the body according to a direction that is tangent to the body, by creating an angle with respect to the longitudinal axis of the body, in particular an angle between 10 and 90°, preferably according to an angle of or close to 90° with respect to the longitudinal axis of the body.

5. Flywheel according to one of claims 1 to 4, **characterised in that** the fibres are combined with a polymeric material, such as polyester or epoxy, with the polymeric material having the form of a coating for the fibres and impregnating the fibres, with the fibres and the polymeric material forming an enclosure (13) under tension covering at least one portion of the outer cylindrical surface of the body.

6. Flywheel as claimed in any preceding claim, **characterised in that** the body (12) is hollow and comprises an additional material (15) that covers the inner wall of the cylindrical body, in particular this material is made of steel.

7. Flywheel according to any of claims 1 to 5, **characterised in that** the body of the flywheel is solid, and comprises a central shaft (52) integrated to said body.

8. Flywheel according to any of claims 1 to 7, **characterised in that** the body (12) of the flywheel is solid and homogeneous, and comprises a means of fastening (6) on each distal end base.

9. Energy storage device (2) comprising a protective enclosure (3), a motor (4) which can be reversed as a generator and is housed in the enclosure, **characterised in that** it comprises a flywheel (1) as claimed in any preceding claim, with the flywheel being associated with the motor, driven by the motor and guided in rotation by journal bearings.

10. Method for manufacturing a flywheel according to any of claims 1 to 8, **characterised in that** it comprises a step of manufacturing by moulding, of the body (12) made mainly of concrete that has a compression resistance of at least 25 MPa, then, after hardening of said concrete, a step of filament winding under tension of pre-stressed fibres which may be impregnated with a polymeric resin.

11. Method for manufacturing a flywheel according to any of claims 1 to 8, **characterised in that** it comprises the following steps:
- the fibres are wound on a mandrel with a minimum tension of winding, in order to prevent them from sliding and/or providing for their maintaining on the outer surface of the mandrel;
- the fibres are assembled by a resin in order to form a cylindrical enclosure;
- the mandrel is removed;
- the tube delimited by the fibres assembled by the resin is placed in a mould;
- concrete is injected into the inside space of the tube at a high pressure, at a pressure value that is able to create a tension in the fibres, with the pressure being maintained for the time required for the concrete to set.

12. Device for fastening a flywheel according to one of claims 1 to 7, said flywheel comprising a central shaft (5) of which at least one end protrudes from the surface of the flywheel, **characterised in that** it comprises at least one annular flange (20), centred on the end portion of the shaft and pressed against the face of the body of the flywheel, and **in that** it further comprises at least one means for tightening (21) the flange on the flywheel able to cooperate with the end of the shaft.
